# FASCICULE DE BREVET EUROPEEN

(11) **EP 1 992 104 B1**
(45) Date de publication et mention de la délivrance du brevet: **12.02.2020**
(21) Numéro de dépôt: 07731702.2
(22) Date de dépôt: 06.03.2007
(51) Int. Cl.: H04L 9/32

(54) **AUTHENTIFICATION D'UN DISPOSITIF INFORMATIQUE AU NIVEAU UTILISATEUR**
AUTHENTIFIZIERUNG EINER COMPUTERVORRICHTUNG AUF BENUTZEREBENE
AUTHENTICATING A COMPUTER DEVICE AT USER LEVEL

(30) Priorité: 07.03.2006 FR 0602019
(43) Date de publication de la demande: 19.11.2008
(73) Titulaire: Orange, 75015 Paris (FR)
(72) Inventeur: FRANCFORT, Stanislas, F-14210 Evrecy (FR); HOSPITAL, Jean-Marc, F-75015 Paris (FR)
(74) Mandataire: Plasseraud IP
(86) Numéro de dépôt international: PCT/FR2007/050885
(87) Numéro de publication internationale: WO 2007/101966

(56) Documents cités:
- EP-A1- 1 667 029
- WO-A1-03/036867
- WO-A2-02/095552
- US-A1- 2001 000 045
- US-A1- 2004 091 136
- MENEZES, VANSTONE, OORSCHOT: "Handbook of Applied Cryptography" 1997, CRC PRESS LLC , USA , XP002418995 page 397 - page 398 page 400 - page 406
- MCCUNE J M ET AL: "Seeing-Is-Believing: Using Camera Phones for Human-Verifiable Authentication", , 1 November 2004 (2004-11-01), pages 1-20, XP003028569, Retrieved from the Internet: URL:http://citeseerx.ist.psu.edu/viewdoc/d ownload?doi=10.1.1.84.3449&rep=rep1&type=p df [retrieved on 2018-04-23]
- Anonymous: "About Barcode", , 1 February 2002 (2002-02-01), XP55469361, Retrieved from the Internet: URL:http://www.barcodediscounters.com/abou tbarcode.html [retrieved on 2018-04-23]

## Description

La présente invention concerne la sécurité dans le domaine de l'informatique et, plus précisément, l'authentification d'un dispositif informatique au niveau d'un utilisateur.

Pour authentifier un premier dispositif informatique par un second dispositif informatique dans un réseau de télécommunication, de nombreuses méthodes d'authentification cryptographique sont connues. Ces méthodes sont en général basées sur un échange de messages entre les deux dispositifs informatiques. Le premier dispositif informatique peut par exemple envoyer au second dispositif informatique une question à laquelle seul le second dispositif informatique est en mesure de répondre. Dans ces conditions, si le second dispositif informatique répond à la question posée, le premier dispositif informatique est alors assuré de ne pas communiquer avec une machine tierce pirate.

Pour authentifier un utilisateur, c'est-à-dire un humain, par un dispositif informatique dans un réseau, des méthodes d'authentification par mot de passe sont communément utilisées. Ces méthodes sont largement mises en œuvre notamment dans le domaine des applications bancaires, dans le domaine de la téléphonie mobile, ainsi que dans le domaine des boîtes aux lettres électroniques. Toutefois, de telles méthodes sont exposées à une technique de piratage basée sur le 'rejeu' des caractéristiques d'authentification, c'est-à-dire qu'un pirate, ayant capturé le mot de passe, peut le rejouer et ainsi usurper l'identité d'un utilisateur pour se faire authentifier frauduleusement.

Dans le domaine de l'authentification d'un dispositif informatique au niveau d'un utilisateur, on peut prévoir d'appliquer l'un ou l'autre type des méthodes précédemment énoncées.

Lorsqu'on prévoit d'appliquer une méthode d'authentification cryptographique, la complexité des calculs cryptographiques à effectuer peut poser un problème majeur pour l'utilisateur qui procède à l'authentification d'un dispositif informatique. Il est alors possible d'associer à l'utilisateur une machine capable d'effectuer de tels calculs. Ainsi, on connaît notamment des réseaux basés sur une architecture de type PKI, pour 'Public Key Infrastructure', dans lesquels une machine locale, en laquelle un utilisateur a toute confiance, exécute les calculs cryptographiques complexes qui sont requis pour l'authentification, côté utilisateur, d'un dispositif informatique. Dans ce type de réseau, un certificat numérique joue le rôle de pièce d'identité électronique qui peut garantir l'identité d'un dispositif informatique, tel qu'un serveur auquel se connecte l'utilisateur. Un certificat de ce type est composé d'une clé publique qui est signée par une autorité de certification. Ainsi, dans ce contexte, il incombe à l'utilisateur de vérifier l'authenticité de la clé publique de l'autorité de certification qui a délivré le certificat du serveur. Cette étape de vérification de l'authenticité n'est pas conviviale et sa mise en oeuvre reste très souvent obscure pour l'utilisateur. Il en résulte qu'une telle étape est rarement mise en œuvre.

Lorsqu'on prévoit d'appliquer des méthodes d'authentification par mot de passe dans le domaine de l'authentification d'un dispositif informatique au niveau de l'utilisateur, une attaque basée sur un rejeu des caractéristiques d'authentification tel que décrit précédemment peut être réalisée. De plus, il ne parait pas aisé pour un utilisateur humain de vérifier un mot de passe d'une entité informatique, ce dernier pouvant présenter un niveau de complexité important.

Par conséquent, les méthodes d'authentification d'un dispositif informatique par un utilisateur présentent des inconvénients majeurs alors que ces méthodes, dans le domaine du service notamment, peuvent présenter un grand intérêt. En effet, elles peuvent permettre d'améliorer la fiabilité des services offerts pour leurs utilisateurs en insérant une étape d'authentification d'un dispositif au niveau de l'utilisateur.

En effet, dans les réseaux de télécommunication de type Internet par exemple, certains serveurs requièrent auprès de leurs utilisateurs des données confidentielles. Tel est le cas notamment pour les serveurs offrant des services bancaires. Ainsi, lorsqu'un utilisateur se connecte, via un terminal utilisateur, tel qu'un ordinateur personnel par exemple, à un serveur pour utiliser un service bancaire, il visualise en général sur son écran d'ordinateur une page WEB comprenant un champ prévu pour recevoir un mot de passe. L'utilisateur est alors amené à fournir des informations confidentielles pour se connecter à un tel service.

Dans de telles conditions, un utilisateur peut fournir des informations confidentielles à un serveur pirate qui n'est pas habilité à recevoir de telles informations. En effet, dans le cas où un serveur pirate émet une page WEB similaire à la page WEB émise par !e serveur habilité à offrir des services bancaires, l'utilisateur n'est pas en mesure de détecter que la page visualisée sur son écran d'ordinateur est en fait émise par un serveur pirate. L'utilisateur peut alors être amené à fournir des informations confidentielles au cours de cette connexion à un serveur pirate, qui peuvent par la suite être utilisées à des fins frauduleuses.

Des exemples de modes de réalisations de l'art antérieur peuvent être notamment trouvés dans les documents WO 03/036867 A1, « Handbook of applied cryptography » MENEZE VANSTONE OORSCHOT, 1997 CRC PRESS LLC USA, XP002418995, WO 02/095552 A2, US 2001/000045 A1; et WO 2005022396, qui concerne l'authentification mutuelle entre un utilisateur et un système.

La présente invention vise à pallier les inconvénients des méthodes d'authentification d'un dispositif informatique au niveau d'un utilisateur. L'invention est définie dans les revendications indépendantes. Des matérialisations particulières sont indiquées dans les revendications dépendantes.

Un premier aspect de la présente invention propose un procédé d'authentification d'un dispositif informatique au niveau d'un utilisateur. Il est prévu d'associer à l'utilisateur au moins un contenu sensoriel, cette association étant connue d'une part au niveau de l'utilisateur et d'autre part au niveau du dispositif informatique. Le procédé peut comprendre les étapes suivantes :
/a/ au niveau du dispositif informatique, déterminer un contenu numérique en fonction du contenu sensoriel associé audit utilisateur,
/b/ depuis le dispositif informatique, fournir au niveau de l'utilisateur le contenu numérique déterminé à l'étape /a/,
/c/ décider d'authentifier le dispositif informatique en comparant le contenu sensoriel associé audit utilisateur au contenu numérique fourni à l'étape /b/.

Dans une réalisation avantageuse, le dispositif informatique gère un paramètre de détermination qui évolue selon une règle connue au niveau de l'utilisateur. L'étape /a/ peut être réalisée en fonction en outre de ce paramètre de détermination et l'étape /c/ peut être réalisée en fonction en outre de ladite règle d'évolution du paramètre de détermination.

A l'étape /a/, le contenu numérique peut être déterminé en combinant le paramètre de détermination avec le contenu sensoriel associé à l'utilisateur. Dans ce cas, à l'étape /b/, le paramètre de détermination et le contenu sensoriel peuvent être fournis distinctement ; et l'étape /c/ peut être réalisée en fonction d'une part du paramètre de détermination et d'autre part du contenu sensoriel, fournis à l'étape /b/.

Le paramètre de détermination peut être une référence temporelle qui évolue selon une règle basée sur une horloge temporelle connue au niveau du dispositif informatique et au niveau de l'utilisateur.

Il peut être prévu d'associer l'utilisateur avec une pluralité de contenus sensoriels. A l'étape /a/, le contenu numérique peut alors être déterminé en sélectionnant un contenu sensoriel parmi la pluralité de contenus sensoriels selon une règle de sélection basée sur le paramètre de détermination, la règle de sélection étant connue au niveau du dispositif informatique et de l'utilisateur ; et l'étape /c/ peut être réalisée en fonction en outre de ladite règle de sélection.

Lorsqu'un réseau de télécommunication relie le dispositif informatique au niveau de l'utilisateur via un terminal utilisateur et lorsqu'une caractéristique cryptographique secrète est connue d'une part au niveau de l'utilisateur et d'autre part au niveau du dispositif informatique, alors à l'étape /b/, on peut réaliser les étapes suivantes :
- crypter le contenu numérique déterminé en fonction de la caractéristique cryptographique et envoyer depuis le dispositif informatique à destination du terminal utilisateur le contenu numérique crypté ;
- décrypter ledit contenu numérique crypté reçu sur le terminal utilisateur en fonction de la caractéristique cryptographique ; et
- depuis le terminal utilisateur fournir au niveau de l'utilisateur le contenu numérique obtenu à l'étape précédente.

Lorsque le dispositif informatique gère un paramètre de détermination évoluant selon une règle connue au niveau de l'utilisateur, l'étape /a/ peut être réalisée en combinant le paramètre de détermination au contenu sensoriel associé de façon dissimulée selon une méthode de type sténographique et l'étape /c/ peut être réalisée en fonction de la règle d'évolution du paramètre de détermination. Dans ces conditions, l'étape de décryptage réalisée par le terminal utilisateur peut comprendre une détection du paramètre de détermination dans le contenu sensoriel combiné de sorte à fournir de manière distincte le contenu sensoriel décrypté et le paramètre de détermination au niveau de l'utilisateur.

Le contenu sensoriel peut être choisi dans un groupe comprenant une image, une séquence d'images, un contenu audio un contenu audiovisuel.

Un deuxième aspect de la présente invention propose un dispositif informatique destiné à être authentifier au niveau d'un utilisateur et comprenant :
- une mémoire pour mémoriser ladite association ;
- une entité de détermination adaptée pour déterminer un contenu numérique en fonction du contenu sensoriel associé audit utilisateur ;
- une entité d'émission adaptée pour fournir au niveau de l'utilisateur le contenu numérique déterminé par ladite entité de détermination.

Ce dispositif informatique peut gérer un paramètre de détermination évoluant selon une règle connue au niveau de l'utilisateur. Alors, l'entité de détermination peut avantageusement déterminer un contenu numérique en fonction en outre de ce paramètre de détermination.

L'entité de détermination peut déterminer un contenu numérique en combinant le paramètre de détermination avec le contenu sensoriel associé à l'utilisateur de sorte à permettre une distinction entre le paramètre de détermination et le contenu sensoriel au niveau de l'utilisateur.

S'il est prévu une association entre l'utilisateur et une pluralité de contenus sensoriels, l'entité de détermination est adaptée pour déterminer le contenu numérique en sélectionnant un contenu sensoriel parmi ladite pluralité de contenus sensoriels selon une règle de sélection basée sur le paramètre de détermination, la règle de sélection étant connue au niveau du dispositif informatique et de l'utilisateur.

Lorsqu'un réseau de télécommunication relie le dispositif informatique au niveau de l'utilisateur via un terminal utilisateur et lorsqu'une caractéristique cryptographique secrète est connue d'une part au niveau de l'utilisateur et d'autre part au niveau du dispositif informatique, l'entité de d'émission peut comprendre :
- des moyens de cryptage adaptés pour crypter, en fonction de la caractéristique cryptographique, le contenu numérique déterminé ;
- des moyens d'émission adaptés pour envoyer depuis le dispositif informatique à destination du terminal utilisateur le contenu numérique crypté.

Lorsqu'un paramètre de détermination évoluant selon une règle connue au niveau de l'utilisateur est géré par le dispositif, l'entité de détermination peut être adaptée pour déterminer le contenu numérique en combinant le paramètre de détermination au contenu sensoriel associé de façon dissimulée selon une méthode de type sténographique.

Un troisième aspect de la présente invention propose un serveur informatique qui est adapté pour fournir au moins un service à un utilisateur, et qui comprend un dispositif selon le deuxième aspect de la présente invention.

Un quatrième aspect de la présente invention propose une entité de gestion d'interface utilisateur relié à un dispositif selon le deuxième aspect de la présente invention, l'entité de gestion d'interface utilisateur étant adaptée pour recevoir, depuis le dispositif informatique, un contenu numérique déterminé en fonction du contenu sensoriel associé à l'utilisateur, et pour fournir à l'utilisateur ce contenu numérique sous la forme d'un contenu sensoriel.

Un cinquième aspect de la présente invention propose un terminal utilisateur dans un système d'authentification d'un dispositif informatique au niveau d'un utilisateur; le dispositif informatique étant relié au terminal utilisateur par un réseau de télécommunication; une association de l'utilisateur avec au moins un contenu sensoriel et une caractéristique cryptographique secrète étant connues d'une part au niveau de l'utilisateur et d'autre part au niveau du dispositif informatique. Le terminal utilisateur comprend :
- une entité de décryptage adaptée pour décrypter, en fonction de la caractéristique cryptographique, ,un contenu numérique sous forme crypté reçu depuis le dispositif informatique ; et
- une entité de gestion d'interface utilisateur adaptée pour fournir à l'utilisateur le contenu numérique décrypté par l'entité de décryptage, sous la forme d'un contenu sensoriel.

Lorsque le dispositif informatique gère un paramètre de détermination évoluant selon une règle connue au niveau de l'utilisateur, et lorsque le terminal utilisateur reçoit un contenu numérique résultant d'une combinaison, réalisée de façon dissimulée selon une méthode de type sténographique, du paramètre de détermination au contenu sensoriel associé à l'utilisateur, ce terminal utilisateur peut comprendre des moyens adaptés pour fournir le contenu sensoriel décrypté et le paramètre de détermination de manière distincte au niveau de l'utilisateur.

Un sixième aspect de la présente invention propose un système d'authentification au niveau d'un utilisateur d'un dispositif informatique selon le deuxième aspect de la présente invention.

Un tel système d'authentification peut comprendre en outre une entité de gestion d'interface selon le quatrième aspect de la présente invention.

Un tel système d'authentification peut comprendre en outre une entité de gestion d'interface selon le cinquième aspect de la présente invention.

Un septième aspect de la présente invention propose un produit programme d'ordinateur à installer dans un dispositif informatique (10), comprenant des instructions aptes à mettre en œuvre le procédé selon le premier aspect de la présente invention, lors d'une exécution du programme par des moyens de traitement du dispositif informatique.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre une architecture d'un système d'authentification selon un mode de réalisation de la présente invention ;
- la figure 2 illustre un échange d'informations réalisé au cours d'une authentification selon un mode de réalisation dans un système tel que celui représenté à la figure 1 ;
- la figure 3 illustre une architecture d'un système d'authentification selon un mode de réalisation de la présente invention ;
- la figure 4 illustre un échange d'informations réalisé au cours d'une authentification selon un mode de réalisation dans un système tel que celui représenté à la figure 3 ;
- la figure 5 illustre un dispositif informatique destiné à être authentifié selon un mode de réalisation de la présente invention ;
- la figure 6 illustre un terminal utilisateur adapté pour la mise en oeuvre d'un procédé d'authentification selon un mode de réalisation de la présente invention.

Un objectif de la présente invention est de proposer une méthode permettant à un utilisateur d'authentifier un dispositif informatique de manière performante et conviviale, pour être assuré que le dispositif informatique avec lequel il échange des informations, éventuellement des informations confidentielles, correspond au dispositif informatique avec lequel il souhaite échanger de telles informations.

Un mode de réalisation de la présente invention est basé sur le fait qu'un contenu sensoriel est connu uniquement d'une part au niveau de l'utilisateur et d'autre part au niveau du dispositif informatique destiné à être authentifié. Ainsi, au cours d'une telle authentification, le contenu sensoriel est reçu au niveau de l'utilisateur. Il est ensuite comparé avec le contenu sensoriel attendu côté utilisateur afin de prendre une décision concernant l'authentification du dispositif informatique considéré. Si le contenu sensoriel reçu s'avère être le même que celui qui est attendu au niveau de l'utilisateur, le dispositif informatique est alors authentifié.

On peut avantageusement prévoir que le dispositif informatique destiné à être authentifié fournit à l'utilisateur ce contenu sensoriel par des voies de transmission protégées, en utilisant par exemple un courrier postal recommandé. On peut aussi prévoir que le contenu sensoriel secret associé à l'utilisateur considéré est défini au niveau de l'utilisateur. Dans ce cas, ce contenu sensoriel est alors envoyé à destination du dispositif informatique destiné à être authentifié selon des voies de transmission protégées.

Au lieu de transmettre tout le contenu sensoriel, soit depuis le dispositif informatique vers le côté utilisateur, soit depuis le côté utilisateur vers le dispositif informatique, il peut être avantageux dans certains contextes, de transmettre simplement une référence du contenu sensoriel considéré, plutôt que de transmettre le contenu sensoriel en lui-même. Ainsi, lorsque le contenu sensoriel est communément connu, tel que par exemple une représentation d'une orchidée ou encore une toile d'un peintre classique, on transmettra préférablement une référence au contenu sensoriel, tel que le mot 'orchidée', ou encore le nom du peintre et de la toile, plutôt qu'une reproduction d'une orchidée ou encore une reproduction de ladite toile.

On entend par les termes 'contenu sensoriel' un contenu qui est adapté pour être transmis dans un réseau de télécommunication, de préférence sous une forme numérique, et qui fait appel aux sens humains tels que ceux de l'ouie et de la vue. Ainsi, de préférence, un tel contenu sensoriel peut être un contenu visuel tel qu'une image, ou encore une séquence d'image, comme par exemple une vidéo. Il peut aussi correspondre à un contenu auditif tel qu'une bande sonore. Il peut également être un contenu audio visuel. Un tel contenu sensoriel peut être transmis depuis le dispositif informatique à destination du côté utilisateur, ou vice-versa, sous une forme numérique.

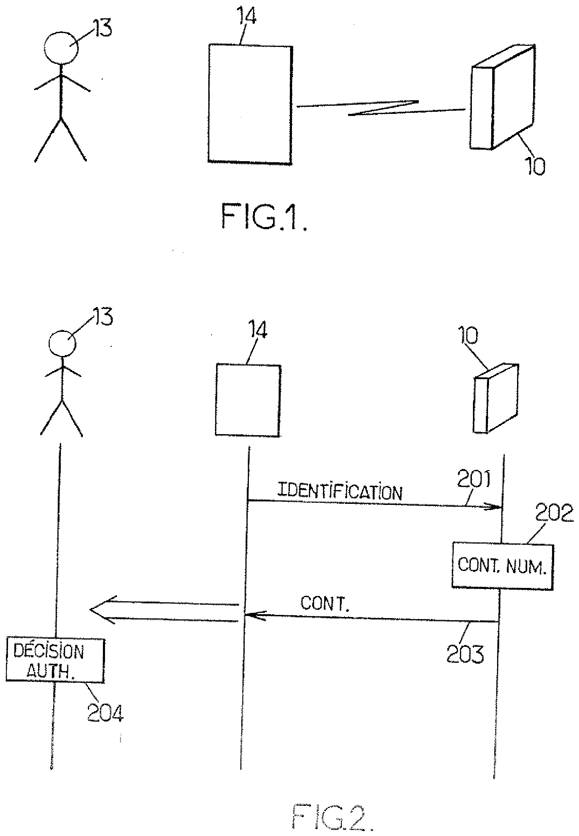

Dans un mode de réalisation de la présente invention, le dispositif informatique à authentifier est directement relié à une entité de gestion d'interface homme-machine, tel que cela est décrit à la figure 1. Dans une telle architecture, le dispositif informatique à authentifier et l'entité de gestion d'interface utilisateur sont directement reliés.

Un utilisateur 13 souhaite se connecter à un dispositif informatique 10 via une entité de gestion d'interface homme-machine 14. Une telle architecture correspond par exemple à un service de distribution de billets de banque mise en œuvre par un serveur 10. Par la suite, la présente invention est décrite dans son application à l'authentification d'un serveur.

Dans cette architecture, la figure 2 illustre les différents échanges réalisés au cours d'une authentification du serveur 10. L'utilisateur 13 fournit à l'entité 14 un identifiant qui transite jusqu'au serveur 10 par un message 201. L'identifiant envoyé dans le message 201 peut être par exemple un nom d'utilisateur, en anglais 'login', ou un numéro de compte client ou encore un numéro dossier, en fonction du service offert par le serveur.

Le serveur 10 gère une association d'au moins un contenu sensoriel avec l'identifiant reçu. Sur la base de cette association, à l'étape 202, le serveur détermine au moins un contenu numérique correspondant à l'identifiant reçu dans le message 201. Puis, le serveur envoie vers l'entité de gestion d'interface utilisateur le contenu numérique déterminé sous la forme d'un message 203. L'entité de gestion d'interface 14 reçoit le contenu numérique et est alors en mesure de fournir à l'utilisateur ce contenu sous la forme d'un contenu sensoriel.

Dans la présente description, lorsque, côté utilisateur, le contenu numérique reçu est fourni au niveau de l'utilisateur sous la forme d'un contenu sensoriel, cela signifie que le contenu numérique est transcrit sous une forme sensorielle. Ainsi, un contenu numérique correspondant à une image, respectivement à une bande sonore, est affiché sur un écran, respectivement diffusé via un haut parleur. On peut également envisager d'utiliser une interface utilisateur de type haptique.

Puis, dans un mode de réalisation de la présente invention, l'utilisateur compare, à une étape 204, le contenu sensoriel, qu'il connaît et qu'il attend, avec le contenu sensoriel fourni par l'entité de gestion d'interface 14. Sur la base de cette comparaison, il est en mesure de décider si le serveur est authentifié ou non.

Pour déterminer un tel contenu numérique à l'étape 202, le serveur peut simplement considérer le contenu sensoriel associé à l'utilisateur sous sa forme numérique.

Dans un autre mode de réalisation, à cette étape 202, le serveur peut déterminer le contenu numérique à envoyer au niveau de l'utilisateur en fonction d'un paramètre de détermination qui évolue. Un tel mode de réalisation présente un avantage contre les attaques basées sur le 'rejeu'. De préférence, un tel paramètre évolue selon une règle d'évolution qui est connue à la fois au niveau du dispositif et au niveau de l'utilisateur. Dans un tel cas, le serveur peut par exemple déterminer le contenu numérique en combinant le contenu sensoriel associé à l'utilisateur avec un paramètre de détermination. Le contenu numérique émis vers l'utilisateur correspond alors à un contenu sensoriel combiné. Dans contexte, l'entité de gestion d'interface utilisateur est adaptée pour fournir à l'utilisateur de manière distincte le contenu sensoriel et le paramètre de détermination. Ainsi, côté utilisateur, on peut avantageusement authentifier le serveur sur la base du contenu sensoriel dont le secret est partagé avec le dispositif informatique, et sur la base du paramètre de détermination dont la règle d'évolution est connue au niveau de l'utilisateur.

Le paramètre de détermination peut avantageusement être indexé sur une référence temporelle. Il peut par exemple varier avec l'heure et/ou la date à laquelle l'authentification en cours a lieu. Ainsi, on peut prévoir que lorsque le contenu sensoriel est un contenu visuel, le paramètre de détermination est affiché en surimpression sur le contenu sensoriel secret. Dans le cas où le contenu sensoriel est un contenu audio, on peut prévoir que le paramètre de détermination est rendu sous forme audio à l'utilisateur, à la suite du contenu sensoriel par exemple.

Ainsi, par exemple, une image donnée étant associée à l'utilisateur et le paramètre de détermination correspondant à la date et l'heure, au cours de l'authentification, l'utilisateur visualise sur un écran de l'entité de gestion d'interface, l'image donnée sur laquelle est sur-imprimée la date et l'heure correspondant sensiblement à la date et l'heure auxquelles est réalisée l'authentification en cours. L'utilisateur reconnaissant l'image donnée et déterminant que le paramètre de détermination est correct, peut en conclure que le serveur est authentifié.

Un paramètre de détermination peut être utilisé, dans un système d'authentification selon un mode de réalisation de la présente invention, comme un paramètre de sélection d'un contenu sensoriel parmi une pluralité de contenus sensoriels associés à l'utilisateur considéré. Dans ce cas, on prévoit avantageusement que la règle de sélection d'un contenu sensoriel, utilisée par le dispositif, est connue également au niveau de l'utilisateur, ce qui permet de réaliser l'authentification du serveur sur la base du paramètre de détermination également.

L'évolution d'un tel paramètre permet au serveur de fournir au niveau de l'utilisateur un contenu numérique différent au fil des authentifications, ce qui permet de se protéger contre le rejeu des caractéristiques d'authentification en cas d'attaques. En effet, dans un tel mode de réalisation, le paramètre de détermination et ses évolutions sont suffisamment connus au niveau de l'utilisateur pour permettre à l'utilisateur de prendre en compte ce paramètre pour authentifier le serveur.

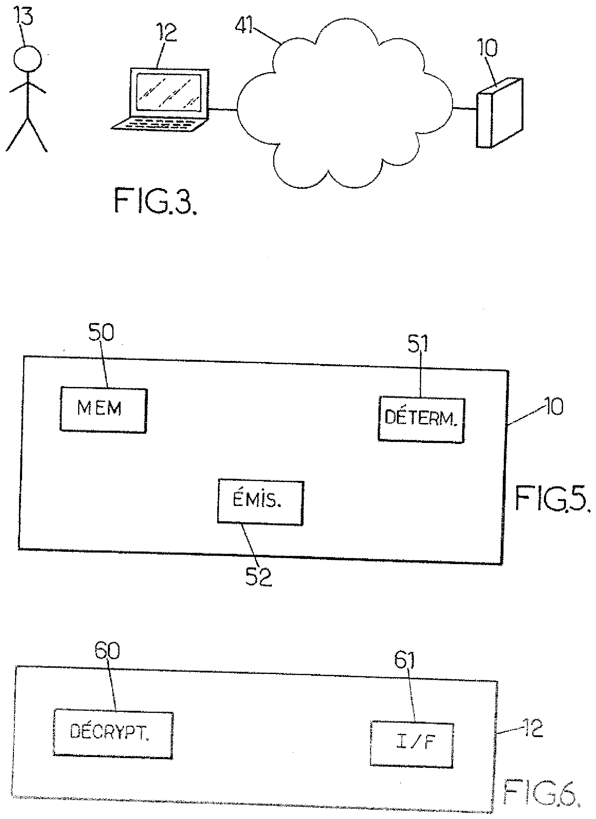

La présente invention peut également être mise en œuvre dans une architecture telle que celle illustrée à la figure 3. Une telle architecture est basée sur un réseau de télécommunication 41 qui relie le serveur destiné à être authentifié 10 avec un terminal utilisateur 12. Ce dernier, utilisé par un utilisateur 13, peut être un ordinateur personnel. La présente invention couvre tous les réseaux de télécommunication qui permettent à un terminal et au serveur 10 d'échanger des informations. Ce type d'architecture correspond par exemple à une authentification d'un serveur 10 au travers d'une page WEB.

Dans un tel contexte, avant de fournir des informations confidentielles au serveur 10, l'utilisateur souhaite s'assurer que le serveur auquel il se connecte est le serveur auquel il souhaite se connecter. A cet effet, dans un mode de réalisation de la présente invention, le serveur 10 et l'utilisateur 13 partagent à la fois un contenu sensoriel secret et une caractéristique cryptographique, qui permettent à l'utilisateur de se prémunir contre des attaques provenant d'éventuels serveurs frauduleux. Dans un mode de réalisation de la présente invention, le serveur mémorise dans une mémoire, préalablement aux échanges de messages relatifs à l'authentification, une association de l'identifiant envoyé par le terminal utilisateur dans le message 201 avec un contenu sensoriel et avec une caractéristique cryptographique. Lorsque le serveur 10 a identifié l'utilisateur, il récupère le contenu et la caractéristique cryptographique correspondants dans la mémoire.

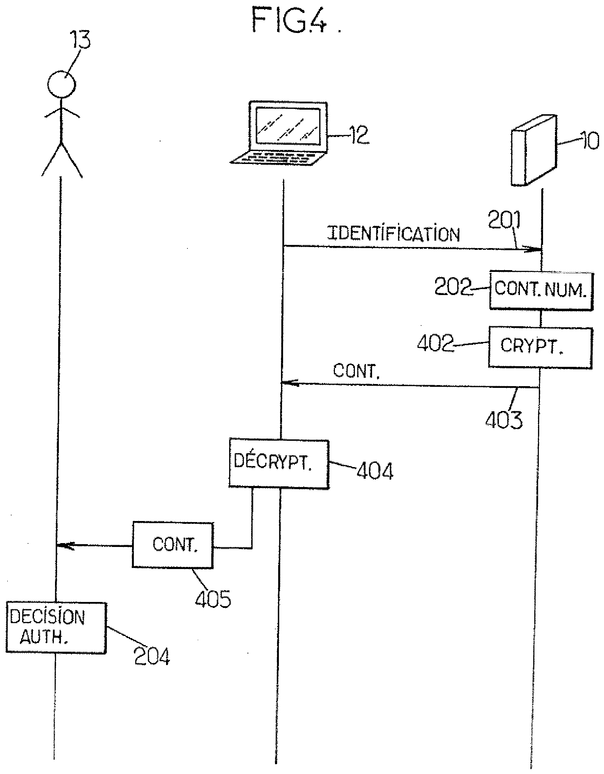

La figure 4 illustre un échange de messages entre le terminal utilisateur et le serveur 10 relatif à l'authentification du serveur au niveau de l'utilisateur selon un mode de réalisation de la présente invention.

Le terminal utilisateur 12 envoie à destination du serveur 10 un message 201 comprenant un identifiant de l'utilisateur 13. Sur réception de ce message, le serveur est en mesure de déterminer un contenu sensoriel et une caractéristique cryptographique associés à cet utilisateur. Ensuite, à l'étape 202, le serveur 10 détermine un contenu numérique comme cela est décrit ci-avant en référence à la figure 2. Dans une telle architecture, l'étape 202 peut également être mise en œuvre en utilisant le paramètre de détermination tel que décrit précédemment. On peut donc utiliser un tel paramètre de détermination pour le combiner au contenu sensoriel associé à l'utilisateur. On peut également utiliser un tel paramètre pour sélectionner un contenu sensoriel parmi une pluralité de contenus sensoriels associés à l'utilisateur.

Le serveur crypte ensuite, à une étape 402, le contenu numérique déterminé en fonction de la caractéristique cryptographique pour obtenir un contenu numérique crypté qu'il envoie au terminal utilisateur 12 via un message 403.

Le terminal utilisateur 12 comprend des moyens adaptés pour décrypter le contenu numérique reçu et pour fournir à l'utilisateur 13, à une étape 405, un contenu sensoriel correspondant au contenu numérique reçu. Puis, l'utilisateur peut alors comparer, à une étape 204, le contenu sensoriel fourni par le terminal utilisateur avec le contenu sensoriel connu au préalable et attendu. Dans le cas où ces contenus sensoriels correspondent, l'utilisateur peut continuer les échanges d'informations avec le serveur en toute confiance puisque le serveur est authentifié. Le contenu numérique peut également correspondre à un contenu sensoriel combiné à un paramètre de détermination par exemple.

Dans un tel contexte, de préférence, le contenu sensoriel est crypté, respectivement décrypté, par une application de cryptage, respectivement une application de décryptage, sécurisée. Ces applications peuvent avantageusement être téléchargées préalablement par le serveur 10 et par le terminal utilisateur 12.

Une telle application peut être intégrée à un navigateur internet du terminal utilisateur. Elle peut permettre de décrypter ainsi que de fournir à l'utilisateur le contenu sensoriel combiné décrypté. Une application de ce type permet donc une grande souplesse d'utilisation pour l'utilisateur. Ce type d'application permet en outre de se prémunir contre d'éventuelles captures d'écran frauduleuses. En effet, dans un tel contexte, pour un contenu sensoriel correspondant à une image par exemple, on peut avantageusement prévoir d'afficher cette image uniquement par zones, de sorte à laisser certaines parties de l'écran vide. On peut notamment prévoir d'afficher en premier lieu l'image sous forme d'un nuage de points, c'est-à-dire sous une forme brouillée, puis de clarifier l'image sous chaque passage du curseur d'écran de la souris. Par différentes méthodes de ce type, bien connues de l'homme du métier, on affiche ainsi l'image seulement de manière segmentée.

Des applications de cryptage et de décryptage sécurisées de type java peuvent avantageusement être utilisées dans le contexte de la présente invention. On peut alors prévoir qu'une telle application java partage une clé secrète avec le serveur. D'autres applications exécutables de manière indépendante du navigateur internet et qui peuvent être mises en oeuvre sur l'initiative de l'utilisateur peuvent également être utilisées dans le contexte de la présente invention. On peut alors prévoir qu'une clé de session soit fournie à une telle application par l'utilisateur.

Une combinaison du contenu sensoriel au paramètre de détermination vise à fournir à l'utilisateur un contenu sensoriel toujours sensiblement différent à chaque session d'authentification, de sorte que les attaques visant à récupérer le contenu sensoriel sur le serveur, pour le présenter à l'utilisateur tel quel, soient vaines.

Dans un mode de réalisation de la présente invention mis en œuvre dans une architecture telle que celle illustrée à la figure 4, dans le cas où une clé secrète est partagée entre le serveur et l'application de décryptage sécurisée, de type java, un paramètre de détermination peut être simplement inséré dans le contenu sensoriel sans modifié sensiblement ce contenu. Il en est ainsi d'une image sur laquelle sont surimprimées la date et l'heure de l'authentification pour former ainsi le contenu sensoriel combiné. Dans un tel cas, un pirate capturant l'image comprenant la surimpression de la date et de l'heure pour la présenter ultérieure à l'utilisateur lors d'une authentification frauduleuse, est contraint de modifier cette image pour mettre à jour la date et l'heure. Or, l'image combinée capturée est cryptée. Par conséquent, l'image combinée qui peut être présentée à l'utilisateur par le pirate comprend une référence temporelle erronée. L'utilisateur est alors en mesure de déceler la fraude avant de fournir des informations confidentielles.

Dans le cas où un cryptage moins sécurisé est mise en œuvre, tel que par exemple lors de l'utilisation d'une clé de session, il est avantageux d'insérer le paramètre de détermination selon une technique de dissimulation d'information. L'homme du métier connaît de nombreuses méthodes de marquage de fichier numérique de façon dissimulée, comme par exemple des méthodes de sténographie ou encore de tatouage numérique (en anglais, 'watermarking'). Ainsi, même si un pirate peut récupérer l'image combinée cryptée, il n'est pas en mesure de détecter le paramètre de détermination inséré. Dans un tel cas, l'application de décryptage possède des moyens de lecture du paramètre de détermination ainsi inséré pour fournir à l'utilisateur ce paramètre de détermination.

Dans un mode de réalisation de la présente invention, l'étape /c/ du procédé d'authentification au niveau de l'utilisateur est réalisée par l'utilisateur lui-même. La présente invention couvre d'autres modes de réalisation dans lesquels l'étape /c/ est réalisée de manière locale au niveau de l'utilisateur par une entité adaptée pour prendre la décision d'authentification du dispositif.

Le terminal utilisateur peut par exemple comprendre une entité adaptée pour mémorisée sous forme numérique le contenu sensoriel au niveau de l'utilisateur. Ainsi, si ce contenu sensoriel est une image reçue par courrier postal, l'utilisateur peut scanner cette image et la stocker sur son terminal utilisateur. L'étape /c/ peut alors réaliser par une entité qui est adaptée pour faire correspondre le fichier numérique reçu depuis le serveur et le fichier numérique stocké localement au niveau de l'utilisateur.

La figure 5 illustre un dispositif informatique 10 destiné à être authentifié au niveau de l'utilisateur. Il comprend une mémoire 50 pour mémoriser l'association entre l'utilisateur et au moins un contenu sensoriel. Il comprend également une entité de détermination 51 adaptée pour déterminer un contenu numérique en fonction du contenu sensoriel associé audit utilisateur. Ce contenu numérique peut être déterminé en fonction du paramètre de détermination tel que décrit précédemment. Un tel dispositif comprend en outre une entité d'émission 52 adaptée pour fournir au niveau de l'utilisateur le contenu numérique déterminé par l'entité de détermination.

La figure 6 illustre un terminal utilisateur 12 dans un système d'authentification selon un mode de réalisation de la présente invention. Il comprend une entité de décryptage 60 adaptée pour décrypter, en fonction de la caractéristique cryptographique dont le secret est partagée avec le dispositif, un contenu numérique sous forme crypté reçu depuis le dispositif informatique. Il comprend aussi une entité de gestion d'interface utilisateur 12 adaptée pour fournir à l'utilisateur ledit contenu numérique décrypté par l'entité de décryptage, sous la forme d'un contenu sensoriel.

## Revendications

1. Procédé d'authentification d'un dispositif informatique (10) au niveau d'un utilisateur (13, 14, 12) ; une association dudit utilisateur avec au moins un contenu sensoriel étant connue d'une part au niveau de l'utilisateur et d'autre part au niveau du dispositif informatique;
ledit procédé comprenant les étapes suivantes :
/a/ au niveau du dispositif informatique, déterminer un contenu numérique en fonction du contenu sensoriel associé audit utilisateur ;
/b/ depuis le dispositif informatique, fournir (203) au niveau de l'utilisateur le contenu numérique déterminé à l'étape /a/ ;
/c/ comparer le contenu sensoriel associé audit utilisateur au contenu numérique fourni à l'étape /b/ afin de décider d'authentifier le dispositif informatique ;
dans lequel le dispositif informatique est configuré pour gérer un paramètre de détermination évoluant selon une règle connue au niveau de l'utilisateur ; dans lequel l'étape /a/ est réalisée en fonction en outre dudit paramètre de détermination et l'étape /c/ est réalisée en fonction en outre de ladite règle d'évolution du paramètre de détermination ;.et dans lequel le paramètre de détermination est une référence temporelle qui évolue selon une règle basée sur une horloge temporelle connue au niveau du dispositif informatique et au niveau de l'utilisateur.

2. Procédé d'authentification selon la revendication 1, dans lequel, à l'étape /a/, le contenu numérique est déterminé en combinant le paramètre de détermination avec le contenu sensoriel associé audit utilisateur ; dans lequel, à l'étape /b/, le paramètre de détermination et le contenu sensoriel sont fournis distinctement ; et dans lequel l'étape /c/ est réalisée en fonction d'une part du paramètre de détermination et d'autre part du contenu sensoriel, fournis à l'étape /b/.

3. Procédé d'authentification selon la revendication 1, dans lequel, lorsque l'association associe un utilisateur avec une pluralité de contenus sensoriels, à l'étape /a/, le contenu numérique est déterminé en sélectionnant un contenu sensoriel parmi ladite pluralité de contenus sensoriels selon une règle de sélection basée sur le paramètre de détermination, ladite règle de sélection étant connue au niveau du dispositif informatique et de l'utilisateur ; et l'étape /c/ est réalisée en fonction en outre de ladite règle de sélection.

4. Procédé d'authentification selon l'une quelconque des revendications précédentes, comprenant, lorsqu'un réseau de télécommunication (41) relie le dispositif informatique au niveau de l'utilisateur via un terminal utilisateur (12) et lorsqu'une caractéristique cryptographique secrète est connue d'une part au niveau de l'utilisateur et d'autre part au niveau du dispositif informatique ;
à l'étape /b/, les étapes suivantes :
- crypter (402) le contenu numérique déterminé en fonction de la caractéristique cryptographique et envoyer depuis le dispositif informatique à destination du terminal utilisateur le contenu numérique crypté (403) ;
- décrypter ledit contenu numérique crypté reçu sur le terminal utilisateur en fonction de la caractéristique cryptographique ; et
- depuis le terminal utilisateur fournir au niveau de l'utilisateur ledit contenu numérique obtenu à l'étape précédente.

5. Procédé d'authentification selon la revendication 4, dans lequel, le dispositif informatique gérant un paramètre de détermination évoluant selon une règle connue au niveau de l'utilisateur,
- l'étape /a/ est réalisée en combinant ledit paramètre de détermination au contenu sensoriel associé de façon dissimulée selon une méthode de type sténographique ;
- l'étape /c/ est réalisée en fonction de ladite règle d'évolution du paramètre de détermination ; et
- l'étape de décryptage réalisée par le terminal utilisateur comprend une détection du paramètre de détermination dans le contenu sensoriel combiné de sorte à fournir de manière distincte le contenu sensoriel décrypté et le paramètre de détermination au niveau de l'utilisateur.

6. Procédé selon l'une quelconque des revendications précédentes, dans lequel le contenu sensoriel est choisi dans un groupe comprenant une image, une séquence d'images, un contenu audio et un contenu audiovisuel.

7. Dispositif informatique (10) destiné à être authentifié au niveau d'un utilisateur (13, 14) ; une association dudit utilisateur avec au moins un contenu sensoriel étant connue d'une part au niveau de l'utilisateur et d'autre part au niveau du dispositif informatique ;
ledit dispositif comprenant :
- une mémoire (50) pour mémoriser ladite association ;
- une entité de détermination (51) adaptée pour déterminer un contenu numérique en fonction du contenu sensoriel associé audit utilisateur ;
- une entité d'émission (52) adaptée pour fournir au niveau de l'utilisateur le contenu numérique déterminé par ladite entité de détermination
dans lequel le dispositif informatique est configuré pour gérer un paramètre de détermination évoluant selon une règle connue au niveau de l'utilisateur ;
dans lequel l'entité de détermination est adapté pour déterminer le contenu numérique en fonction du contenu sensoriel associé audit utilisateur en fonction en outre dudit paramètre de détermination ;
dans lequel le paramètre de détermination est une référence temporelle qui évolue selon une règle basée sur une horloge temporelle connue au niveau du dispositif informatique et au niveau de l'utilisateur.

8. Serveur informatique adapté pour fournir au moins un service à un utilisateur, ledit serveur comprenant un dispositif selon la revendication 7.

9. Produit programme d'ordinateur à installer dans un dispositif informatique (10), comprenant des instructions aptes à mettre en œuvre le procédé selon l'une quelconque des revendications 1 à 6, lors d'une exécution du programme par des moyens de traitement du dispositif informatique.

## Patentansprüche

1. Verfahren zur Authentifizierung einer Computervorrichtung (10) auf der Ebene eines Benutzers (13, 14, 12); wobei eine Assoziierung des Benutzers mit mindestens einem sensorischen Inhalt einerseits auf der Ebene des Benutzers und andererseits auf der Ebene der Computervorrichtung bekannt ist;
wobei das Verfahren die folgenden Schritte beinhaltet:
/a/ auf der Ebene der Computervorrichtung, Bestimmen eines digitalen Inhalts in Abhängigkeit von dem mit dem Benutzer assoziierten sensorischen Inhalt;
/b/ durch die Computervorrichtung, Liefern (203) des in Schritt /a/ bestimmten digitalen Inhalts an die Ebene des Benutzers;
/c/ Vergleichen des mit dem Benutzer assoziierten sensorischen Inhalts mit dem in Schritt /b/ gelieferten digitalen Inhalt, um zu entscheiden, ob die Computervorrichtung authentifiziert werden soll;
wobei die Computervorrichtung dazu konfiguriert ist, einen Bestimmungsparameter, der sich gemäß einer auf der Ebene des Benutzers bekannten Regel verändert, zu verwalten;
wobei Schritt /a/ darüber hinaus in Abhängigkeit von dem Bestimmungsparameter durchgeführt wird und Schritt /c/ darüber hinaus in Abhängigkeit von der Veränderungsregel des Bestimmungsparameters durchgeführt wird; und wobei der Bestimmungsparameter eine zeitliche Referenz ist, die sich gemäß einer Regel verändert, die auf einer auf der Ebene der Computervorrichtung und auf der Ebene des Benutzers bekannten Zeituhr basiert.

2. Authentifizierungsverfahren nach Anspruch 1, wobei in Schritt /a/ der digitale Inhalt durch Kombinieren des Bestimmungsparameters mit dem mit dem Benutzer assoziierten sensorischen Inhalt bestimmt wird; wobei in Schritt /b/ der Bestimmungsparameter und der sensorische Inhalt getrennt geliefert werden; und wobei Schritt /c/ in Abhängigkeit von einerseits dem Bestimmungsparameter und andererseits dem sensorischen Inhalt, die in Schritt /b/ geliefert werden, durchgeführt wird.

3. Authentifizierungsverfahren nach Anspruch 1, wobei, wenn die Assoziierung einen Benutzer mit einer Vielzahl von sensorischen Inhalten assoziiert, in Schritt /a/ der digitale Inhalt durch Auswählen eines sensorischen Inhalts aus der Vielzahl von sensorischen Inhalten gemäß einer Auswahlregel, die auf dem Bestimmungsparameter basiert, bestimmt wird, wobei die Auswahlregel auf der Ebene der Computervorrichtung und des Benutzers bekannt ist; und wobei Schritt /c/ darüber hinaus in Abhängigkeit von der Auswahlregel durchgeführt wird.

4. Authentifizierungsverfahren nach einem der vorhergehenden Ansprüche, das, wenn ein Telekommunikationsnetzwerk (41) die Computervorrichtung über ein Benutzerendgerät (12) mit der Ebene des Benutzers verbindet und wenn eine geheime kryptographische Eigenschaft einerseits auf der Ebene des Benutzers und andererseits auf der Ebene der Computervorrichtung bekannt ist; in Schritt /b/ die folgenden Schritte beinhaltet:
- Verschlüsseln (402) des in Abhängigkeit von der kryptographischen Eigenschaft bestimmten digitalen Inhalts und Schicken des verschlüsselten digitalen Inhalts (403) von der Computervorrichtung an das Benutzerendgerät;
- Entschlüsseln des an dem Benutzerendgerät empfangenen verschlüsselten digitalen Inhalts in Abhängigkeit von der kryptographischen Eigenschaft; und
- Liefern, durch das Benutzerendgerät, des in dem vorherigen Schritt erhaltenen digitalen Inhalts an die Ebene des Benutzers.

5. Authentifizierungsverfahren nach Anspruch 4, wobei, wenn die Computervorrichtung einen Bestimmungsparameter, der sich gemäß einer auf der Ebene des Benutzers bekannten Regel verändert, verwaltet,
- Schritt /a/ durchgeführt wird, indem der Bestimmungsparameter auf verdeckte Art und Weise gemäß einer stenographischen Methode mit dem assoziierten sensorischen Inhalt kombiniert wird;
- Schritt /c/ in Abhängigkeit von der Veränderungsregel des Bestimmungsparameters durchgeführt wird; und
- der Entschlüsselungsschritt, der von dem Benutzerendgerät durchgeführt wird, ein Erkennen des Bestimmungsparameters in dem kombinierten sensorischen Inhalt beinhaltet, um den entschlüsselten sensorischen Inhalt und den Bestimmungsparameter getrennt an die Ebene des Benutzers zu liefern.

6. Verfahren nach einem der vorhergehenden Ansprüche, wobei der sensorische Inhalt aus einer Gruppe gewählt wird, die ein Bild, eine Folge von Bildern, einen Audioinhalt oder einen audiovisuellen Inhalt beinhaltet.

7. Computervorrichtung (10), die dazu bestimmt ist, auf der Ebene eines Benutzers (13, 14) authentifiziert zu werden; wobei eine Assoziierung des Benutzers mit mindestens einem sensorischen Inhalt einerseits auf der Ebene des Benutzers und andererseits auf der Ebene der Computervorrichtung bekannt ist;
wobei die Vorrichtung Folgendes beinhaltet:
- einen Speicher (50) zum Speichern der Assoziierung;
- eine Bestimmungsinstanz (51), die dazu ausgelegt ist, in Abhängigkeit von dem mit dem Benutzer assoziierten sensorischen Inhalt einen digitalen Inhalt zu bestimmen;
- eine Sendeinstanz (52), die dazu ausgelegt ist, um den durch die Bestimmungsinstanz bestimmten digitalen Inhalt an die Ebene des Benutzers zu liefern,
wobei die Computervorrichtung dazu konfiguriert ist, einen Bestimmungsparameter, der sich gemäß einer auf der Ebene des Benutzers bekannten Regel verändert, zu verwalten;
wobei die Bestimmungsinstanz dazu ausgelegt ist, den digitalen Inhalt in Abhängigkeit von dem mit dem Benutzer assoziierten sensorischen Inhalt und darüber hinaus in Abhängigkeit von dem Bestimmungsparameter zu bestimmen;
wobei der Bestimmungsparameter eine zeitliche Referenz ist, die sich gemäß einer Regel verändert, die auf einer auf der Ebene der Computervorrichtung und auf der Ebene des Benutzers bekannten Zeituhr basiert.

8. Computerserver, der dazu ausgelegt ist, mindestens einen Dienst an einen Benutzer zu liefern, wobei der Server eine Vorrichtung nach Anspruch 7 beinhaltet.

9. Computerprogrammprodukt für die Installation in einer Computervorrichtung (10), das Anweisungen beinhaltet, die fähig sind, das Verfahren nach einem der Ansprüche 1 bis 6 zu implementieren, wenn das Programm von Verarbeitungsmitteln der Computervorrichtung ausgeführt wird.

## Claims

1. Method for authenticating a computer device (10) at the level of a user (13, 14, 12); an association of said user with at least one sensory content being known on the one hand at the level of the user and on the other hand at the level of the computer device;
said method comprising the following steps:
/a/ at the level of the computer device, determine a digital content as a function of the sensory content associated with said user;
/b/ from the computer device, provide (203) at the level of the user the digital content determined in step /a/;
/c/ compare the sensory content associated with said user with the digital content provided in step /b/ so as to decide to authenticate the computer device;
in which the computer device is configured to manage a determination parameter evolving according to a rule known at the level of the user;
in which step /a/ is carried out as a function furthermore of said determination parameter and step /c/ is carried out as a function furthermore of said rule of evolution of the determination parameter; and
in which the determination parameter is a temporal reference which evolves according to a rule based on a temporal clock known at the level of the computer device and at the level of the user.

2. Authentication method according to Claim 1, in which, in step /a/, the digital content is determined by combining the determination parameter with the sensory content associated with said user; in which, in step /b/, the determination parameter and the sensory content are provided separately; and in which step /c/ is carried out as a function on the one hand of the determination parameter and on the other hand of the sensory content, provided in step /b/.

3. Authentication method according to Claim 1, in which, when the association associates a user with a plurality of sensory contents, in step /a/, the digital content is determined by selecting a sensory content from among said plurality of sensory contents according to a selection rule based on the determination parameter, said selection rule being known at the level of the computer device and of the user; and step /c/ is carried out as a function furthermore of said selection rule.

4. Authentication method according to any one of the preceding claims, comprising, when a telecommunication network (41) links the computer device at the level of the user via a user terminal (12) and when a secret cryptographic characteristic is known on the one hand at the level of the user and on the other hand at the level of the computer device;
in step /b/, the following steps:
- encrypt (402) the digital content determined as a function of the cryptographic characteristic and dispatch from the computer device destined for the user terminal the encrypted digital content (403);
- decrypt said encrypted digital content received on the user terminal as a function of the cryptographic characteristic; and
- from the user terminal provide at the level of the user said digital content obtained in the previous step.

5. Authentication method according to Claim 4, in which, the computer device managing a determination parameter evolving according to a rule known at the level of the user,
- step /a/ is carried out by combining said determination parameter with the associated sensory content in a concealed manner according to a scheme of stenographic type;
- step /c/ is carried out as a function of said rule of evolution of the determination parameter; and
- the decryption step carried out by the user terminal comprises a detection of the determination parameter in the combined sensory content so as to provide in a separate manner the decrypted sensory content and the determination parameter at the level of the user.

6. Method according to any one of the preceding claims, in which the sensory content is chosen from a group comprising an image, a sequence of images, an audio content and an audiovisual content.

7. Computer device (10) intended to be authenticated at the level of a user (13, 14); an association of said user with at least one sensory content being known on the one hand at the level of the user and on the other hand at the level of the computer device;
said device comprising:
- a memory (50) for storing said association;
- a determination entity (51) adapted to determine a digital content as a function of the sensory content associated with said user;
- an emission entity (52) adapted to provide at the level of the user the digital content determined by said determination entity
in which the computer device is configured to manage a determination parameter evolving according to a rule known at the level of the user;
in which step the determination entity is adapted to determine the digital content as a function of the sensory content associated with said user as a function furthermore of said determination parameter;
in which the determination parameter is a temporal reference which evolves according to a rule based on a temporal clock known at the level of the computer device and at the level of the user.

8. Computer server adapted to provide at least one service to a user, said server comprising a device according to Claim 7.

9. Computer program product to be installed in a computer device (10), comprising instructions able to implement the method according to any one of Claims 1 to 6, during an execution of the program by processing means of the computer device.
